Europäisches Patentamt

European Patent Office

Office européen des brevets

(11) Publication number: **0 009 392**
**B1**

## (12) EUROPEAN PATENT SPECIFICATION

(45) Date of publication of patent specification: **19.08.87**

(21) Application number: **79301932.4**

(22) Date of filing: **18.09.79**

(51) Int. Cl.⁴: **F 16 L 21/02**

(54) Couplings.

(30) Priority: **22.09.78 GB 3772278**

(43) Date of publication of application:
**02.04.80 Bulletin 80/07**

(45) Publication of the grant of the patent:
**19.08.87 Bulletin 87/34**

(84) Designated Contracting States:
**AT BE CH DE FR IT LU NL SE**

(56) References cited:
**DE-A-2 548 581**
**US-A-3 827 734**
**US-A-3 963 268**
**US-A-4 083 586**
**US-A-4 112 979**

(73) Proprietor: **POLYPIPE LIMITED**
**Warmsworth Halt Industrial Estate Edlington Lane**
**GB-Warmsworth, Doncaster, S. Yorks (GB)**

(72) Inventor: **Upton, John**
**8 Church Street Darfield**
**Near Barnsley South Yorkshire (GB)**

(74) Representative: **Johnson, Terence Leslie et al**
**Edward Evans & Co. Chancery House 53-64**
**Chancery Lane**
**London WC2A 1SD (GB)**

Courier Press, Leamington Spa, England.

## Description

The invention relates to pipe couplings, and particularly to pipe couplings of the kind in which a tubular member is received within a socket, the socket having an internal circumferential groove which in use receives a sealing ring to form a seal between the inner wall of the socket and the outer wall of the tubular member.

Where the socket is formed of plastics material, problems arise in conveniently forming the circumferential groove. DE—A—2548581 discloses a pipe coupling comprising a socket which in use receives a tubular member, the socket having an internal circumferential groove which in use receives a sealing ring to form a seal between the inner wall of the socket and the outer wall of the tubular member, the groove being defined between a shoulder on the inner wall of the socket and an end of a separately formed retaining ring inserted into the socket and retained therein by a snap fit.

A pipe coupling like this however is liable to be insecure, and thus leak, when it is subject to rough handling, vibrations and the like. Moreover, it is virtually impossible to accommodate sealing rings of different sizes on a pipe coupling as shown in DE—A—2548581.

Accordingly it is an object of the invention to seek to mitigate these disadvantages.

Accordingly the invention is characterised in that the retaining ring has at least one radially extending projection and there are at least two apertures in the wall of the socket, spaced apart longitudinally of the socket, so that the retaining ring can be retained within the socket in at least two different positions, engagement of the projection of the retaining ring in the first aperture enabling the groove to accommodate one size of sealing ring, while engagement of the projection in the second aperture enables the groove to accommodate another size of sealing ring.

The first aperture and the second aperture may be interconnected such that the projection engaging in one of the apertures can be moved to engage in the interconnected aperture by rotation of the retaining ring with respect to the socket.

The first aperture may comprise a first circumferentially extending slot, and the second aperture may comprise a second circumferentially adjacent slot which also extends circumferentially but in addition extends longitudinally to a greater extent than the first slot.

A pipe coupling embodying the invention can accommodate sealing rings of different sizes, and is secure and thus leak-proof under all conditions.

The invention includes a pipe coupling according to the invention when connected to a tubular member. The tubular member may for example comprise a pipe or part of another coupling.

By way of example, specific embodiments of the invention will now be described, with reference to the accompanying drawings, in which:—

Figure 1 is a cross section through a first pipe coupling;

Figure 2 is a side elevation of the socket of an embodiment of pipe coupling according to the invention;

Figure 3 is a cross section through the socket of Figure 2;

Figure 4 is a side elevation of the retaining ring of the embodiment of pipe coupling;

Figure 5 is a cross section through the retaining ring; and

Figures 6 and 7 are cross sections through the embodiment of pipe coupling showing how the coupling can accommodate two different sizes of sealing ring.

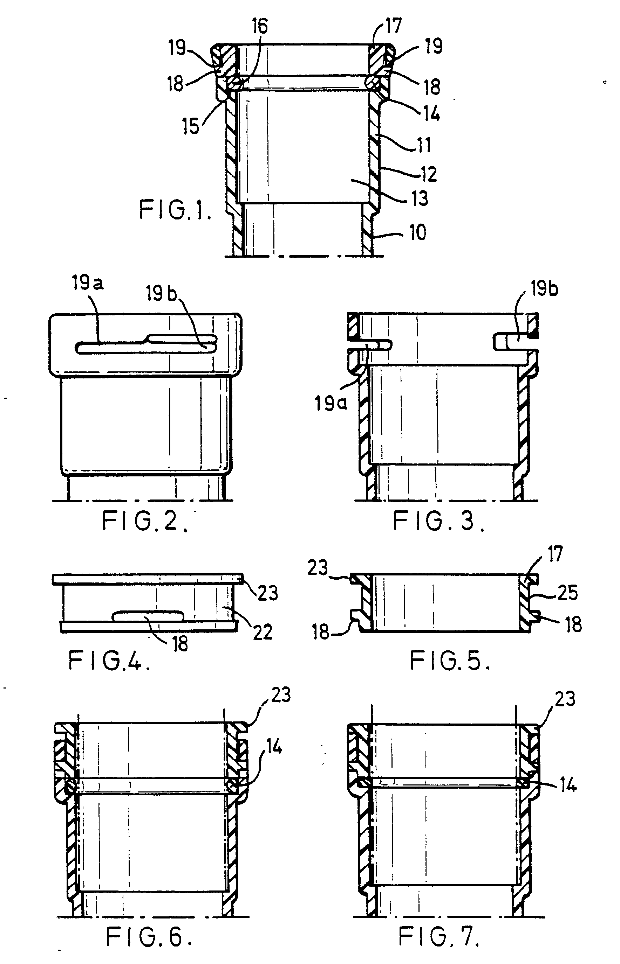

The coupling shown in Figure 1 comprises one end of an elongate plastics pipe 10. The end of the pipe has enlarged internal and external diameters 11 and 12 to form a socket 13. In use this socket will receive the end of another pipe (not shown) and an O-ring 14 is provided to form a seal between the two pipes and prevent leakage of any fluid flowing through the pipes.

The O-ring 14 is housed in an internal circumferential groove defined between a shoulder 15 formed on the inner wall of the socket and an end 16 of a separately formed retaining ring 17 which is secured within the socket. The ring 17 has a pair of diametrically opposite arcuate ribs 18 each of which engage in a slot which extends radially through the wall of the socket and is made up of two interconnected circumferential adjacent apertures.

The embodiment of pipe coupling shown in Figures 2 to 7 is very similar to the embodiment shown in Figure 1, like parts having like reference numerals.

The slot is made up of two interconnected circumferentially adjacent apertures 19a and 19b.

The retaining ring 17 differs in that its height is greater than the retaining ring shown in Figure 1.

The projections 18 can be snapped into the apertures 19a to retain an O-ring 14 as shown in Figure 7. If however it is desired to accommodate a larger O-ring, or to compress the O-ring 14 to a smaller extent, as shown in Figure 16, so that the socket can accommodate a slightly larger pipe, then it is merely necessary to rotate the retaining ring 16 so that the projections 18 move into the apertures 19b. These slots extend in a longitudinal direction further than the apertures 19a so that while the retaining ring 17 is still securely retained within the socket, it is free to move slightly further outwardly of the socket, as best illustrated in Figure 6.

Rotation of the retaining ring is facilitated by the fact that the outer face 23 of the retaining ring remains clear of the socket.

The invention is not restricted to the details of the foregoing embodiments of Figs. 2—7. For instance, instead of having two ribs 18 and two apertures 19, these might be more. For example there might be three ribs 18 and three corresponding apertures 19.

## Claims

1. A pipe coupling comprising a socket (13) which in use receives a tubular member, the socket having an internal circumferential groove which in use receives a sealing ring (14) to form a seal between the inner wall of the socket and the outer wall of the tubular member, the groove being defined between a shoulder (15) on the inner wall of the socket and an end (16) of a separately formed retaining ring (17) inserted into the socket and retained therein by a snap fit characterised in that the retaining ring (17) has at least one radially extending projection (18) and there are at least two apertures (19a, 19b) in the wall of the socket, spaced apart longitudinally of the socket, so that the retaining ring (17) can be retained within the socket in at least two different positions, engagement of the projection (18) of the retaining ring in the first aperture (19a) enabling the groove to accommodate one size of sealing ring (14), while engagement of the projection in the second aperture (19b) enables the groove to accommodate another size of sealing ring (14).

2. A pipe coupling as claimed in Claim 1, in which the first aperture (19a) and the second aperture (19b) are interconnected such that the projection engaging in one of the apertures can be moved to engage in the interconnected aperture by rotation of the retaining ring with respect to the socket.

3. A pipe coupling as claimed in Claim 2, in which the said first aperture (19a) comprises a first circumferentially extending slot, and the second aperture (19b) comprises a second circumferentially adjacent slot which also extends circumferentially but in addition extends longitudinally to a greater extent than the first slot.

## Patentansprüche

1. Rohrsteckverbindung mit einer Muffe (13), die bei der Verwendung ein rohrförmiges Teil aufnimmt, wobei die Muffe eine inwendige Rundausnehmung aufweist, die bei der Verwendung einen Dichtungsring (14) aufnimmt, um einen Zwischenraum zwischen der Innenwand der Muffe und der Aussenwand des rohrförmigen Teils abzudichten, wobei die Ausnehmung zwischen einem Vorsprung (15) an der Innenwand der Muffe und einem Ende (16) eines getrennt gebildeten Schliessringes (17) gebildet und in die Muffe eingeführt und dort durch einen Schnappverschluss gehalten wird, dadurch gekennzeichnet, dass der Schliessring (17) mindestens einen radial überstehenden Ueberstand (18) aufweist, und dass mindestens zwei Oeffnungen (19a, 19b) in der Muffenwand vorhanden sind, die von der Muffe längs nach aussen gerichtet sind, so dass der Schliessring (17) innerhalb der Muffe in mindestens zwei verschiedenen Stellungen gehalten werden kann, wobei der Ueberstand (18) am Schliessring in der ersten Oeffnung (19a) aufgenommen wird, und dadurch die Ausnehmung einen Dichtungsring (14) von einer Grösse halten kann, während der Ueberstand in der zweiten Oeffnung (19b) aufgenommen wird und dadurch die Ausnehmung einen Dichtungsring (14) einer anderen Grösse aufnehmen kann.

2. Rohrsteckverbindung nach Anspruch 1, dadurch gekennzeichnet, dass die erste Oeffnung (19a) und die zweite Oeffnung (19b) so miteinander verbunden sind, dass der Ueberstand, der in einer der Oeffnungen aufgenommen wird, so verschoben werden kann, dass er in die verbundene Oeffnung durch Drehung des Schliessringes in bezug auf die Muffe bewegt und aufgenommen werden kann.

3. Rohrsteckverbindung nach Anspruch 2, dadurch gekennzeichnet, dass besagte erste Oeffnung (19a) eine erste Rundrille umfasst, und dass die zweite Oeffnung (19b) eine zweite, naheliegende Rundrille umfasst, die sich ebenfalls um den Umfang ausdehnt, aber sich gleichzeitig in Längsrichtung in einem grösseren Ausmass als die erste Rille ausdehnt.

## Revendications

1. Raccord comprenant une tulipe (13) qui, en service, reçoit un élément tubulaire, la tulipe comportant une gorge circonférentielle interne qui, en service, reçoit un anneau d'étanchéité (14) pour former un joint d'étanchéité entre la paroi interne de la tulipe et la paroi externe de l'élément tubulaire, la gorge étant définie entre un épaulement (15) prévu sur la paroi interne de la tulipe et une extrémité (16) d'un anneau de retenue formé séparément (17) qui est introduit dans la tulipe et qui y est retenu par un emboîtement élastique, caractérisé en ce que l'anneau de retenue (17) comporte au moins une saillie radiale (18), et au moins deux ouvertures (19a, 19b) sont prévues dans la paroi de la tulipe et sont espacées l'une de l'autre dans le sens longitudinal de celle-ci, de sorte que l'anneau de retenue (17) peut être retenu dans la tulipe dans au moins deux positions différentes, l'engagement de la saillie (18) de l'anneau de retenue dans la première ouverture (19a) permettant à la gorge de recevoir un anneau d'étanchéité (14) d'un calibre, tandis qui l'engagement de la saillie dans la seconde ouverture (19b) permet à la gorge de recevoir un anneau d'étanchéité (14) d'un autre calibre.

2. Raccord suivant la revendication 1, dans lequel la première ouverture (19a) et la seconde ouverture (19b) sont reliées l'une à l'autre, de telle sorte que la saillie qui s'engage dans une des ouvertures puisse être engagée dans l'autre ouverture par rotation de l'anneau de retenue par rapport à la tulipe.

3. Raccord suivant la revendication 2, dans lequel la première ouverture (19a) comprend une première fente circonférentielle et la seconde ouverture (19b) comprend une seconde fente adjacente qui s'étend aussi dans le sens circonférentiel mais qui, en outre, s'étend davantage dans le sens longitudinal que la première fente.

FIG.1.

FIG.2.

FIG.3.

FIG.4.

FIG.5.

FIG.6.

FIG.7.